# EUROPEAN PATENT SPECIFICATION

(11) **EP 1 973 709 B1**
(45) Date of publication and mention of the grant of the patent: **28.06.2017**
(21) Application number: 06842648.5
(22) Date of filing: 21.12.2006
(51) Int. Cl.: B25J 19/00

(54) **INTEGRATED EXPLOSION PROTECTION APPARATUS FOR SUPERVISION AND CONTROL OF ADVANCED ELECTRICAL APPARATUSES**
EXPLOSIONSCHUTZVORRICHTUNG ZUM ÜBERWACHEN UND STEUERN EINER ELEKTRISCHEN VORRICHTUNG
APPAREIL INTEGRE DE PROTECTION CONTRE LES EXPLOSIONS POUR LA SURVEILLANCE ET LE CONTROLE D'APPAREILS ELECTRIQUES DE POINTE

(30) Priority: 28.12.2005 SE 0502927
(43) Date of publication of application: 01.10.2008
(73) Proprietor: ABB AS, 1396 Billingstad (NO)
(72) Inventor: KROGEDAL, Arnulf, 4322 Sandnes (NO); TORKILDSEN, Per Ole, 4340 Bryne (NO); BREKKEN, Ole Kristian, 4330 Ålgård (NO)
(74) Representative: Savela, Reino Aleksi
(86) International application number: PCT/IB2006/054993
(87) International publication number: WO 2007/074416

(56) References cited:
- EP-A1- 0 447 881
- EP-A2- 0 424 206
- US-A- 3 100 502
- US-A- 3 620 501
- US-A- 4 985 653
- US-A- 5 949 209

## Description

### Technical field of the Invention

The present invention relates to a flow- and pressure sensor and to a system for explosion protection of electrical apparatuses and machineries, such as manipulators or industrial robots, located in hazardous environments, such as environments containing explosive concentrations of inflammable gases, dusts or vapours. The invention is especially related to systems that apply internal pressurized air into an explosion proof casing/housing and having a purging system.

### Background of the Invention

Advanced electrical apparatuses and automatic machineries as e.g. robots will normally consist of a complex design including electrical components as e.g. motors, relays, electrical cables etc and which are arranged in an enclosure consisting of sub-sections to withstand exposition from the operation environment.

According to the International and National Ex-Approval Standards IEC 79-2 (1983) the enclosure, ducts and coupling components should be able to withstand an overpressure equal to 1,5 times the maximum overpressure specified in normal service or 0,2 kPa (2 mbar), which is greater. According to IEC 79-2 the location, size and number of inlet and outlet orifices (air supply and sensors) can be sufficient to ensure efficient purging. The number of orifices, air supply and sensors, should be chosen with regard to the design and disposition of the protected apparatus, particular consideration being given to the needs of sub-compartments into which the apparatus might be divided.

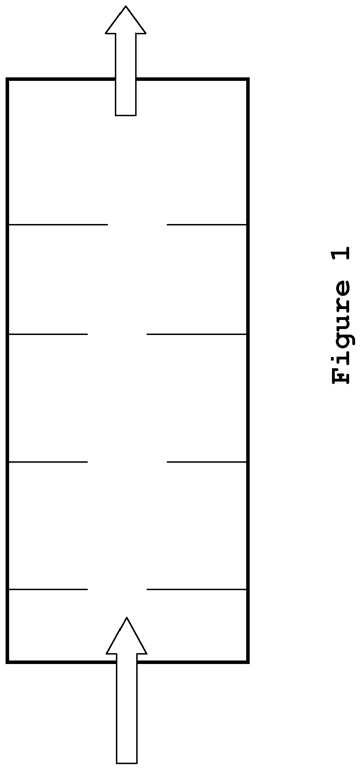

One example of a pressurized enclosure consisting of serial-coupled sub-compartments or chambers are shown schematically in figure 1, see also "Electrical Instruments in Hazardous Locations" ISBN: 87664-376-4 1978, 2nd edition 1980.

The advantages of applying explosion protection based on air pressure and purging methods instead of other protection methods is that you obtain a more light, compact and cost effective solution based on that it is possible to apply standard non-ex components as e.g. motors etc. The pressurizing and purging protection method is a widely accepted protection concept for explosion protection. It is accepted world-wide and is relatively straightforward to comprehend.

The technique of pressurizing and purging enclosures of electrical apparatuses and machines, including robots, is to prevent the ingress of a flammable atmosphere. Purging is itself a widely accepted protection concept for explosion protection. The potentially ignition capable apparatus as e.g. a robot is typically mounted inside an enclosure. The enclosure is then pressurized to a positive air pressure relative to the atmospheric pressure. A positive pressure of about 0,5 mbar is all that is required.

In DE 2.228.598 is disclosed a protection enclosure for protection of manipulators, e.g. robot arms, consisting of serial-coupled sub-compartments and motors and electrical cables to stand gas or fluid materials. This patent does however not disclose any control or purge systems or any relief valve unit. EP-A-0 424 206 discloses a flow- and pressure sensor having a relief valve and being arranged as an integrated purge and pressure unit in an explosion protection system of a robot.

EP-A-0 447 881 discloses an integrated purge and pressure unit in an explosion protected proof enclosure having serial coupled sub-compartments.

### Summary of the Invention

A problem with known systems for explosion protection of electrical apparatuses is that they are heavy, voluminous, expensive and has to be provided with a number of local detectors and units for ventilation and that the systems therefore can not be optimally located.

Another problem is that the known systems can fail, that they are not sufficiently reliable.

Another problem is that the relief valve often will be blocked by dust or paint.

Another problem is that the known systems do not obtain an optimal air consumption relief valve often will be blocked by dust or paint.

The object of the present invention is to provide a pressure and purging controller and sensor apparatus that solves these problems and which is cost effective and reliable for application on advanced electrical apparatus and machineries as e.g. industrial robots and that contain a pressurized enclosure comprising sub-compartments linked together in a serial coupled set-up.

These and other objects are achieved according to the present invention by a flow- and pressure sensor according to claim 1 and an explosion protection system according to claim 2. A flow- and pressure/purging controller and sensor system according to the invention gives the following advantages over known and available control and sensor solutions:
- the integrated robust and advanced flow and pressure sensor is to be applied to control environments, enclosures, with high dynamic forces that is present when e.g. a robot accelerate and/or stop,
- a flow and pressure sensor and control system is to be applied in an enclosure comprising sub-compartments which are linked together in a serial coupled set-up,
- the advanced and cost effective and reliable flow- and pressure (Purge) sensor and control system is able to supervise both the inlet and outlet of the complete enclosure consisting of sub-compartments and does not need local sensors in each of the sub-compartments (ref. IEC 79-2 which describe system containing sub-compartments and local air supply and control by orifices),
- that a relief valve is built in,
- can be arranged at the most optimal place in the pressurized enclosure as e.g. on the upper arm of a robot manipulator and thereof obtain a simple and effective enclosure design consisting of sub-chambers as a serial coupled chamber,
- the purge and pressure controller may include supervision of cable breakage and short circuits for the flow sensor
- the flow supervision is able to detect leakages before a purging sequence,
- the flow and pressure sensor and control system may be optimized for ducts (tubes, hoses) containing electrical cables and air supply, for purging and air pressure to obtain Ex-protection according to IEC 79-2 chapter 2.9 and 4.7.
- the advanced flow- and pressure sensor and control system may obtain optimal air, and energy, consumption by having a combined control of the inlet and outlet air-flow and pressure level and thereof avoid arranging several local supplies and sensors to obtain a complete control of a complex enclosure comprising sub-compartments,
- the advanced purge and pressure control system will be able to control several separate enclosures/machines simultaneously supervision of the air leakage level during operation mode and thereof secure an optimal air consumption as well as reduce the potential downtime of the system by giving feedback information about the status of the leakage level and thereof initiate need for preventive maintenance (as. e.g. replacement of sealing etc),
- the purge controller is able to control more than one enclosure and gives thereof possibility to apply optional equipments e.g. on a robot arm and which are arranged in a separate over-pressurized enclosure.

### Brief Description of Drawings

The present invention will be described in more detail in the following, with reference to the attached drawings.
**Figure 1** illustrates schematically a typical pressurized enclosure consisting of serial-coupled sub compartments.
**Figure 2** shows a control system of an integrated purge- and pressure control system including a purge and pressure sensor and a relief valve unit.
**Figure 3** shows a relief valve.
**Figure 4** shows the relief valve and its surrounding equipment.
**Figure 5** shows a block diagram of the purge and pressure controller unit.
**Figure 6** shows a diagram of the status of purge P3 LED during flow sequence.

### Description of Preferred Embodiments

**Figure 1** illustrates schematically a known example of a pressurized enclosure consisting of serial coupled sub compartments with communicating passages. An inflow of pressurized air is shown schematically to the left and an outflow of the air to the right.

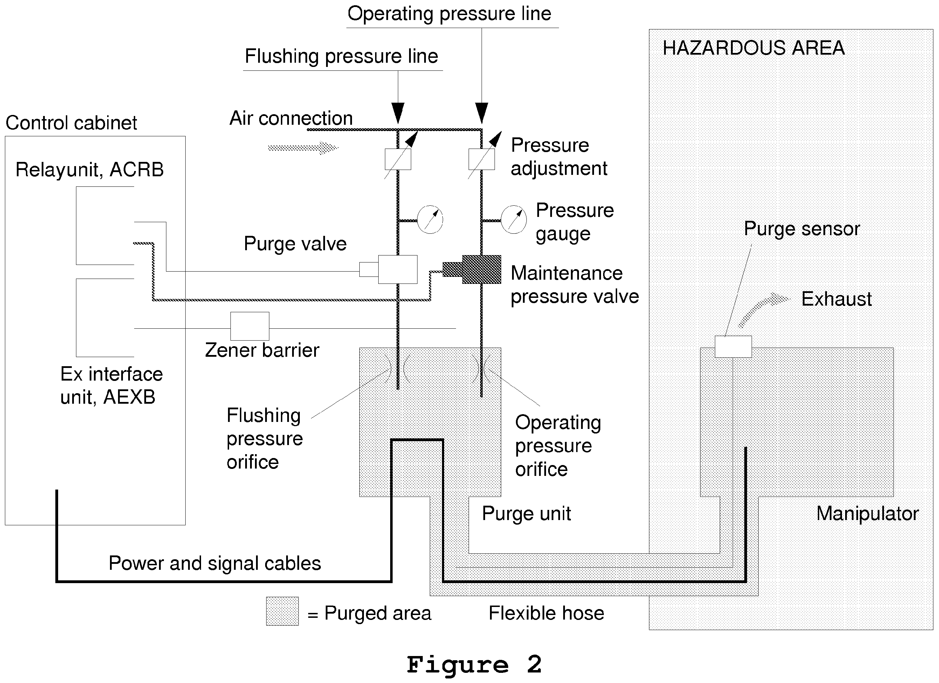

**Figure 2** illustrates a system overview of the integrated purge and pressure control system that includes a purge and pressure sensor and relief valve unit. A control cabinet is arranged to control a purge valve and a maintenance pressure valve. In a hazardous area a manipulator (not shown) is located inside an enclosure. A purge sensor and an exhaust valve are arranged on the enclosure, that typically is divided in sub compartments. The purge sensor is electrically connected via a cable located in a flexible hose and via a Zener barrier to the control cabinet.

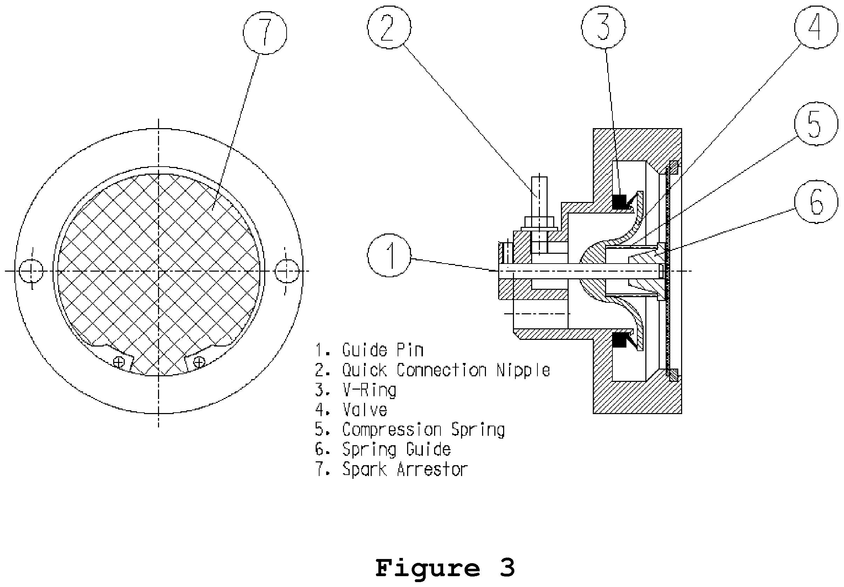

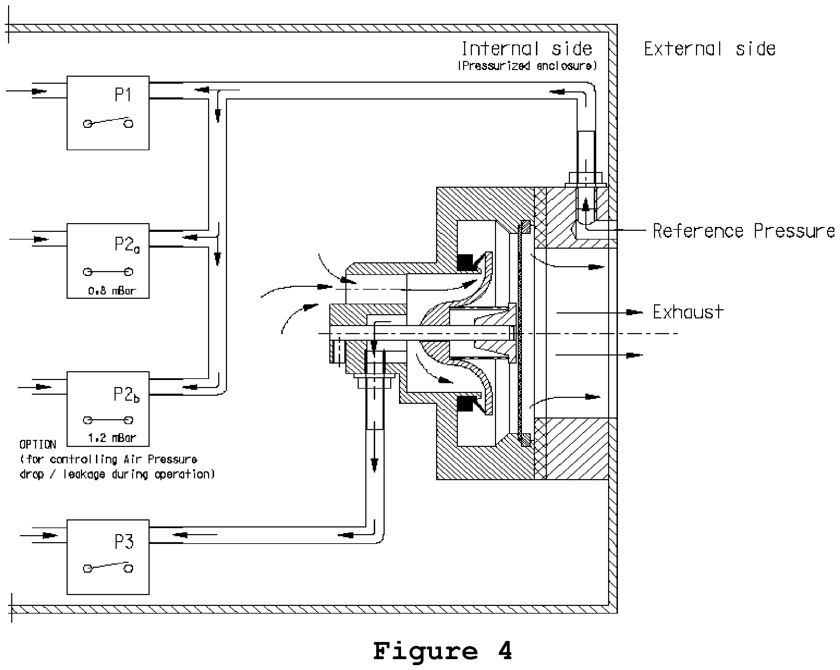

**Figure 3** illustrates the purge relief valve unit which is designed to take high airflow capacity during purging and to give a determined air leakage during operation. This leakage will keep the outlet clean from dust or contamination from powder and/or paint and it minimizes the friction in the valve. Preferably the valve is designed for paint powder material application where contamination can impact the operation and reliability of the unit. Controlled leak air flow along the valve-guide and thereof makes the valve "float". Moving parts in the valve are designed with low inertia and allows operation by acceleration higher than 10 m/s2. The pressure drop through the valve is measured during purge sequence, and correct airflow is supervised by a sensor P3 (see figure 4).

**Figure 4** illustrates the purge and pressure sensors and the relief valve unit and their interconnections. The sensor P1 is used to detect possible build-up of pressure inside the enclosure, caused by e.g. clogged flame grid in the exhaust tube. The sensor P2 a monitors the overpressure in the enclosure/robot interior in relation to the outside pressure during normal operation. The sensor P2 b controls air pressure drop or leakages before reaching the P 2a level which activate shut down. The P2a sensor controls the leakage level during normal operation mode and thereof will be able to prevent uncontrolled downtime, i.e. "fail safe design", by applying the feedback as an input for the preventive maintenance program (inspection and replacement of sealings, couplings etc.

An optional solution is to integrate an additional Air maintenance regulator valve to compensate for leakages and thereof avoid shut-down., see the "Maintenance Pressure Valve" in figure 2.

Another optional solution is to integrate an additional air maintenance regulator valve to compensate for leakages and thereof avoid shutdown as well as reduce air supply consumption by only activating the air supply when a minimum level is reached, not having a continuous air supply, see the "Maintenance Pressure Valve" in figure 2.

The sensor P3 monitors the air flow during the flushing/- purging sequence by measuring Delta-P across the sensor nozzle.

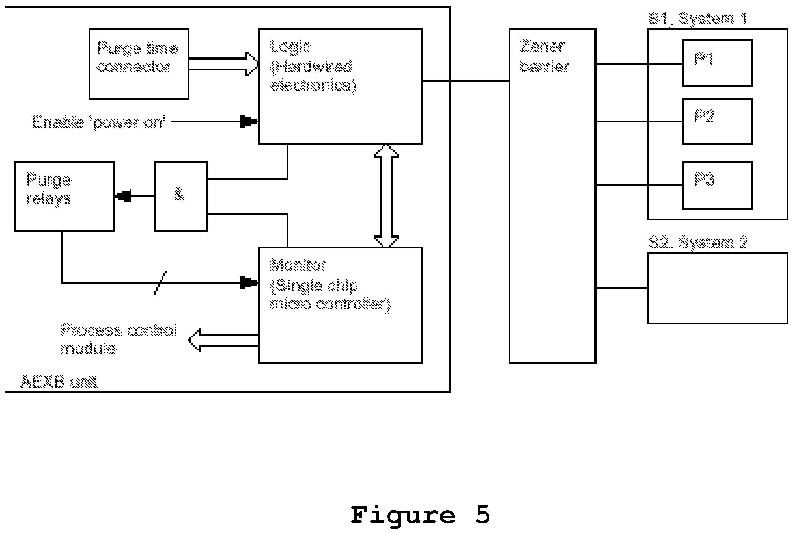

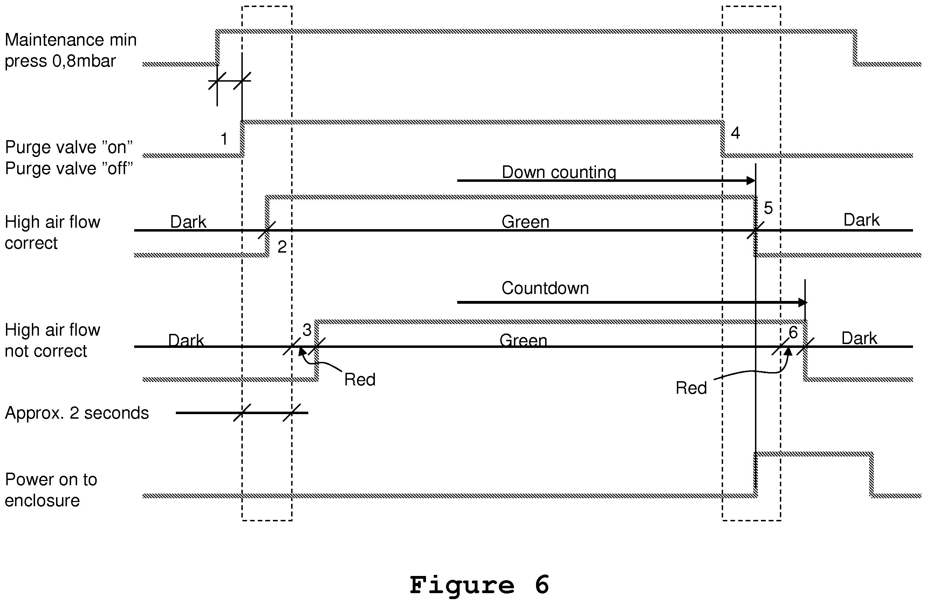

**Figure 5** illustrates a block diagram of the purge and pressure controller unit. The unit has the following key control functions,
- operates more than one enclosure, see S1, System 1 and S2, System 2,
- controls the purge flow level, see sequence diagram in figure 6,
- controls the pressure levels during Purging, i.e. max pressure level to avoid a too high pressure in the enclosure in order to meet safety regulations for pressurized enclosures,

- controls minimum pressure level during operation to secure that the enclosure has a higher pressure level than the environment during operation of the machine/robot,
- controls the leakage level during operation mode and thereof be able to prevent uncontrolled downtime, "fail safe design", by applying the feedback as an input for the preventive maintenance program, inspection and replacement of sealings, couplings etc.

**Figure 6** illustrates that before starting the purge sequence The controller checks for min pressure created by the maintenance pressure.
If not min press: too big leakage
Min pressure OK: start purging by operating Purge Valve Check for correct flow (delta pressure across purge relief valve)
If correct: Start countdown of preset time
Monitor flow until timer finished.
Check high flow indicator off before giving signal for power on to pressurized enclosure.

In this specification the invention has been described with reference to specific embodiments. It will, however, be evident that variations and modifications may be made of the invention without therefore departing from the scope of the claims.

## Claims

1. A flow- and pressure sensor for an explosion protection system for electrical apparatuses and machineries, the sensor being arranged as an integrated purge and pressure unit having a relief valve with a valve membrane, a valve movement guide (1) and means for establishing a leak air flow along the valve movement guide for reducing the friction, the relief valve having a balanced arrangement of moving parts as the valve membrane.

2. An explosion protection system for electrical apparatuses and machineries, such as manipulators or industrial robots, located in hazardous environments, i.e. environments containing explosive concentrations of inflammable gases, dusts or vapours, comprising means for applying internal pressurized air into an explosion protected proof enclosure and that has a purging system and electrical components, such as motors, relays, IC-boards, cables etc, said system being arranged in an enclosure having serial coupled sub-compartments and said system comprising a flow- and pressure sensor according to claim 1.

3. An explosion protection system according to claim 2, **characterized in that** the integrated purge and pressure unit includes means to control the flow and pressure level.

4. An explosion protection system according to claim 2 or 3, **characterized in that** the integrated purge- and pressure unit includes means arranged to detect leakages before a purge sequence.

5. An explosion protection system according to any of claims 2 to 4, **characterized by** means for controlling the leakage level during normal operation mode and to prevent uncontrolled downtime by applying the feedback as an input for the preventive maintenance program.

6. An explosion protection system according to any of claims 2 to 5, **characterized by** means for controlling the air pressure level and consumption during operation mode by activating the air supply when reaching a minimum level.

## Patentansprüche

1. Strömungs- und Drucksensor für ein Explosionsschutzsystem für elektrische Vorrichtungen und Maschinen, wobei der Sensor als integrierte Spül- und Druckeinheit ausgelegt ist, die ein Entlastungsventil mit einer Ventilmembran, eine Ventilbewegungsführung (1) und Mittel zum Herstellen einer Leckluftströmung entlang der Ventilbewegungsführung zum Reduzieren der Reibung aufweist, wobei das Entlastungsventil eine ausgeglichene Anordnung von beweglichen Teilen als Ventilmembran aufweist.

2. Explosionsschutzsystem für elektrische Vorrichtungen und Maschinen wie Manipulatoren und Industrieroboter, die sich in gefährlichen Umgebungen befinden, d. h. Umgebungen, die explosive Konzentrationen von entzündlichen Gasen, Stäuben oder Dämpfen enthalten, umfassend Mittel zum Zuführen von interner Druckluft in ein explosionsgeschütztes Gehäuse und ein Spülsystem sowie elektrische Komponenten wie Motoren, Relais, Platinen mit integrierten Schaltungen, Kabel usw. aufweisend, wobei das System in einem Gehäuse mit hintereinander gekoppelten Teilkammern angeordnet ist und das System einen Strömungs- und Drucksensor gemäß Anspruch 1 umfasst.

3. Explosionsschutzsystem gemäß Anspruch 2, **dadurch gekennzeichnet, dass** die integrierte Spül- und Druckeinheit Mittel zum Steuern der Strömung und des Druckpegels aufweist.

4. Explosionsschutzsystem gemäß Anspruch 2 oder 3, **dadurch gekennzeichnet, dass** die integrierte Spül- und Druckeinheit Mittel aufweist, die dafür ausgelegt sind, Leckagen vor einer Spülsequenz zu erkennen.

5. Explosionsschutzsystem gemäß einem der Ansprüche 2 bis 4, **gekennzeichnet durch** Mittel zum Steuern des Leckagepegels während des normalen Betriebsmodus und um unkontrollierte Ausfallzeit zu vermeiden, indem die Rückführung als Eingang für das Programm zur vorbeugenden Instandhaltung verwendet wird.

6. Explosionsschutzsystem gemäß einem der Ansprüche 2 bis 5, **gekennzeichnet durch** Mittel zum Steuern des Luftdruckpegels und des Verbrauchs während des Betriebsmodus durch Aktivieren der Luftzuführung, wenn ein Mindestpegel erreicht wird.

## Revendications

1. Capteur de flux et de pression d'un système de protection contre les explosions pour appareils et machines électriques, le capteur étant agencé sous forme d'unité intégrée de purge et de pression ayant une valve de détente avec une membrane de femmes, un guide de mouvements de valve (chiffre un) et un moyen pour établir un flux d'air de fuite le long du quai de menthe valve afin de réduire la friction, la valve de détente ayant un agencement équilibré de pièces mobiles comme membrane de valve.

2. Système de protection contre les explosions pour appareils et machines électriques, tel que des manipulateurs ou robots industriels, placés dans des environnements dangereux, à savoir des environnements contenant des concentrations explosives de gaz, poussières ou vapeurs inflammables, comprenant un moyen pour appliquer de l'air pressurisé interne dans une enceinte étanche protégée contre les explosions et possédant un système de purge et des composants électriques, tels que moteurs, relais, cartes à circuit imprimé, câbles etc.,
ledit système étant agencé dans une enceinte comportant des sous-compartiments couplés en série et ledit système comprenant un capteur de flux et de pression selon la revendication 1.

3. Système de protection contre les explosions selon la revendication 2, **caractérisé en ce que** l'unité intégrée de purge et de pression comporte un moyen de contrôle du flux et du niveau de pression.

4. Système de protection contre les explosions selon la revendication 2 ou 3, **caractérisé en ce que** l'unité intégrée de purge et de pression comporte un moyen agencé pour détecter des fuites avant une séquence de purge.

5. Système de protection contre les explosions selon l'une quelconque des revendications 2 à 4, **caractérisé par** un moyen de contrôle du niveau de fuite durant un mode de fonctionnement normal et servant à empêcher un temps d'arrêt non prévu en appliquant la rétroaction comme entrée du programme de maintenance préventive.

6. Système de protection contre les explosions selon l'une quelconque des revendications 2 à 5, **caractérisé par** un moyen de contrôle du niveau de pression d'air et de la consommation durant le mode de fonctionnement en activant l'alimentation d'air lorsqu'un niveau minimum est atteint.
